# EUROPEAN PATENT APPLICATION

(11) **EP 1 527 722 A1**
(43) Date of publication of application: **04.05.2005**
(21) Application number: 04256344.5
(22) Date of filing: 14.10.2004
(51) Int. Cl.: A47J 37/07, A23B 4/052

(54) **An electric grill**

(30) Priority: 28.10.2003 US 693938
(71) Applicant: Eastern Sources Housewares (Hong Kong) Limited, Kwun Tong, Kowloon, Hong Kong (CN)
(72) Inventor: Lai, Wai Hing, Kowloon Hong Kong (CN); Lau, Wing Chung Joseph, Pokfulam, Hong-Kong (CN)
(74) Representative: Howe, Steven

(57) **Abstract**

An electric grill (10) is disclosed as including a body (12) supporting a grill plate (26) for cooking food, a container (34) for contain smoking element (36), and a heat source (18) for heating up the smoking element (36) in the container (34) for producing smoke for smoking the food cooked by the grill plate (26).

## Description

This invention relates to an electric grill, and in particular such an electric grill capable of smoking the food when grilling.

### Background of the Invention

There are in existence a large variety of electric grills. For example, US Patent No. 5,970,858 to *Toehm et al.* discloses an electric grill having a grill plate with ribs for holding the foodstuffs from sliding downwardly across the cooking surface, a marinade cup for containing marinade, and indentations along a perimeter fence for receiving skewers. The contents of *Toehm et al.* are hereby incorporated herein for reference.

Such conventional electric grills cannot perform smoking function during operation, especially if used indoor, as such will cause the indoor environment to be filled with smoke. In addition, the parts of the electric grill cannot be cleaned easily after use, because of the accumulation of grease.

It is thus an object of the present invention to provide an electric grill in which the aforesaid shortcomings are mitigated, or at least to provide a useful alternative to the public.

It is a further object of the present invention to provide an electric grill capable of smoking the food being grilled.

It is a yet further object of the present invention to provide an electric grill in which the smoking function can be activated or deactivated easily.

It is a still further object of the present invention to provide an electric grill which can be easily cleaned.

Such and other objects of the present invention will become apparent in the ensuing discussion.

### Summary of the Invention

According to the present invention, there is provided an electric grill including a body member supporting a grill plate for cooking food; a container adapted to contain smoking element; and a first heating member adapted to heat up the smoking element in said container for producing smoke for smoking the food cooked by said grill plate.

### Brief Description of the Drawings

A preferred embodiment of the present invention will now be described, by way of example only, with reference to the accompanying drawings, in which:
Fig. 1 is an exploded view of an electric grill according to the present invention; and
Fig. 2 is a vertical cross-sectional view of the electric grill shown in Fig. 1.

### Detailed Description of the Preferred Embodiment

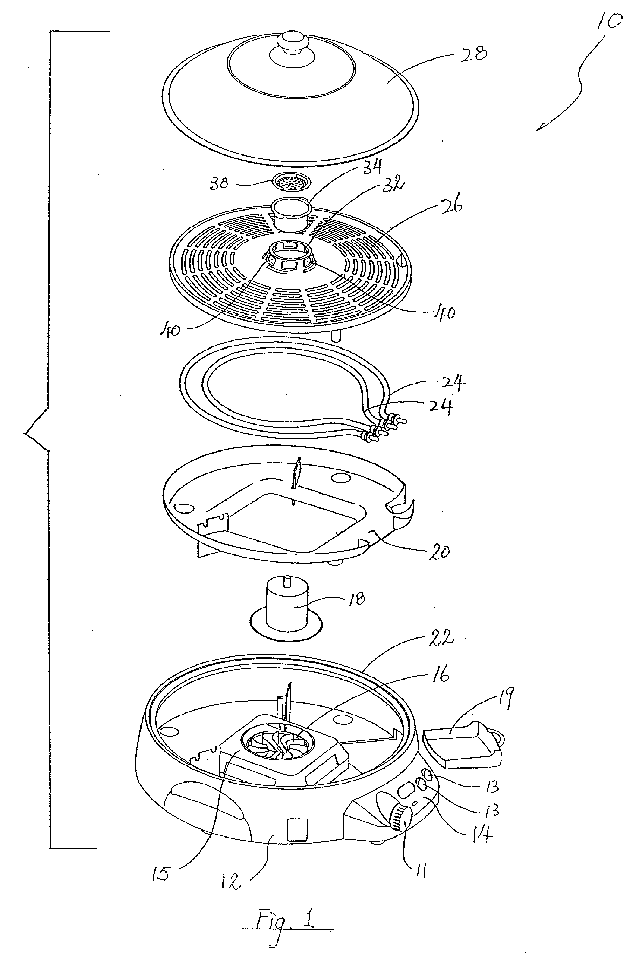

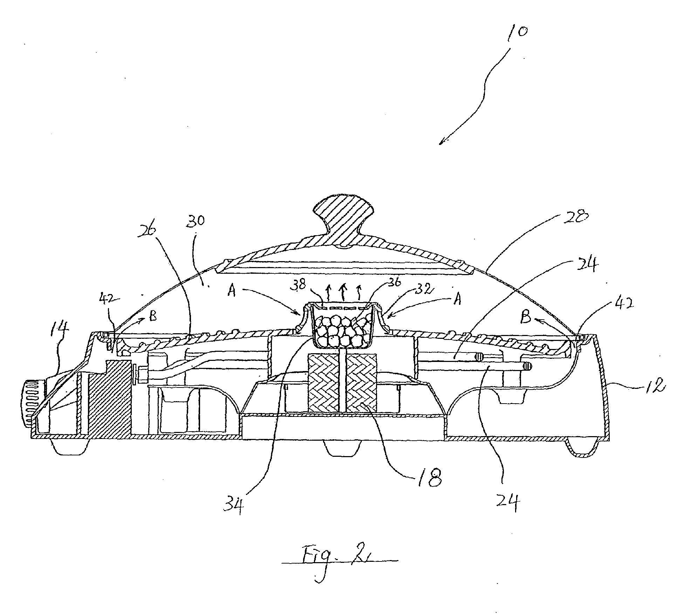

An exemplary electric grill according to a preferred embodiment of the present invention is shown in Figs. 1 and 2, and generally designated as 10. The electric grill 10 includes a body 12 for housing various electrical and electronic components, controllable by operation of a knob 11 and switches 13 of a control panel 14. A grease catch 19 is detachably secured with the body 12 for catching grease generated during grilling.

Contained in a top-open housing 15 in the body 12 is a fan 16. The top of the housing 15 is closed by a removable non-woven fabric (not shown) capable of capturing oil. Positioned on the housing 15 is a heat source 18, which may be an electric resistance heatable upon passing of electricity, or an infra-red heater adapted to emit infra-red radiation. An inner liner 20 is releasably engageable with a peripheral edge 22 of the body 12. Provided in the grill 10 are two electric resistive wires 24. The wires 24 may be caused to heat up upon passing of electricity, for heating a grill plate 26 positioned above the wires 24. A metal lid 28 with a glass window is releasably engageable with the body 12 to cover the grill 10. In particular, a cavity 30 is formed between the grill plate 26 and the lid 28 when the lid 28 is engaged with the body 12 of the grill 10.

The grill plate 26, which is detachably placed on the inner liner 20, has a central upwardly extending hollow portion 32 for detachably supporting a container 34 for containing such smoking elements as processed and synthesized wood chips, smoke pellets, and the like 36 which can give out smoke when heated, e.g. up to 200 °C to 250°C, for smoking the food. For regulating the amount of smoke given out by the wood chips or smoke pellets 36, a perforated plate 38 is provided to releasably cover the top open end of the container 34. In this grill 10, the container 34, and thus the wood chips or smoke pellets 36 contained in it, may be heated up by the heat source 18. It should also be noted that on the peripheral surface of the portion 32 are a number of holes 40, allowing air in the cavity 30 which is filled with smoke particles to pass through.

During operation, the grill 10 may be used as a conventional grill with no smoking function, in which case the heat source 18 will not be activated, and only one or both of the electric resistive wires 24 will be activated to heat up the grill plate 26 for grilling food supported on the plate 26.

If smoking of the food is required, wood chips or smoke pellets 36 are put into the container 34 and the heat source 18 then activated for heating up the container 34 and the wood chips or smoke pellets 36 up to the required temperature for generating smoke. In order to prevent smoke from filling the indoor environment in which the grill 10 is used, the lid 28 is detachably engaged with the body 12 to cover the grill plate 26. The fan 16 is then activated to generate air circulation in the grill 10. In particular, when the fan 16 is activated, smoke-filled and grease-filled air is drawn from the cavity 30 between the lid 28 and the grill plate 26 through the holes 40 (in the direction indicated by the arrows A in Fig. 2) into the interior of the body 12. The air so drawn then passes through the removable non-woven fabric (not shown) so that the oil/grease carried by it is captured by the fabric. The air is then caused to flow back to the cavity 30 between the lid 28 and the grill plate 26 through side holes 42 in the body 12, in the direction indicated by the arrows B in Fig. 2.

Apart from being an electric resistance or an infra-red heater as discussed above, the heat source 18 may also be a halogen lamp of an operating voltage of 120V, 230V or 240V, depending on the voltage of the local municipal electricity supply, and with an operating power of 300W-500W, depending on the requirement of the manufacturers. An advantage of using a light source, e.g. a halogen lamp as discussed herein, as the heat source 18 is that heat can be supplied and withdrawn nearly instantly. Thus the smoking operation can be controlled more easily. As the operating temperature of a halogen lamp can be very high, it is advisable to provide a strong and heat-resistant casing. In this connection, an appropriate material for making such a casing may be a glass-ceramic material traded by SCHOTT Glas, of Germany, under their trade mark CERAN®. Such a material has a very high thermal stability and can withstand a temperature of up to 750°C. This material can transmit heat very efficiently with nearly no heat loss.

It can be seen that, by way of the above-mentioned arrangement, smoke grilling of food can be performed indoor, without fear of filling the indoor environment with smoke. In addition, conventional non-smoke grilling and smoke grilling of food may be performed by a single apparatus, at the wish of the user. In particular, the smoking function can be easily activated and deactivated, simply by activating or deactivating the heat source 18, e.g. by operating one of the buttons 13. Furthermore, as the lid 28, grill plate 26, container 34, plate 38 of the container 34 and the inner liner 20 are all releasably engaged with each other, and thus with the body 12 of the grill 10, all these parts can be detached from the body 12 of the grill 10 for thorough cleaning. The remaining part of the grill 10 may also be more thoroughly cleaned than existing grills.

It should be understood that the above only illustrates an example whereby the present invention may be carried out, and that various modifications and/or alterations may be made thereto without departing from the spirit of the invention.

It should also be understood that various features of the invention which are, for brevity, described here in the context of a single embodiment, may also be provided separately or in any appropriate sub-combinations.

## Claims

1. An electric grill including:
a body member supporting a grill plate for cooking food;
a container adapted to contain smoking element; and
a first heating member adapted to heat up the smoking element in said container for producing smoke for smoking the food cooked by said grill plate.

2. An electric grill according to Claim 1 wherein said container is releasably engageable with said grill plate.

3. An electric grill according to Claim 2 including a perforated cover for releasably covering said container.

4. An electric grill according to Claim 1 further including a cover releasably engageable with said grill plate to define a cavity.

5. An electric grill according to Claim 4 further including a fan adapted to draw air from said cavity between said grill plate and said cover into an interior of said body member.

6. An electric grill according to Claim 5 wherein said grill plate includes at least one aperture allowing entry of air from said cavity between said grill plate and said cover into said interior of said body member.

7. An electric grill according to Claim 5 further including a filter through which said air drawn from said cavity between said grill plate and said cover passes.

8. An electric grill according to Claim 7 further including at least one aperture allowing said air, after passing through said filter, to pass back to the cavity between said grill plate and said cover.

9. An electric grill according to Claim 1 including a second heating member for heating up said grill plate.

10. An electric grill according to Claim 1 wherein said grill plate, said container, an inner liner member and said body member are releasably engageable with each other.

11. An electric grill according to Claim 1 wherein said first heating member is a light source.

12. An electric grill according to Claim 11 wherein said light source is a halogen lamp.
